Europäisches Patentamt

(19) European Patent Office

Office européen des brevets

(11) Numéro de publication: **0 172 094**
**B1**

(12) **FASCICULE DE BREVET EUROPÉEN**

(45) Date de publication du fascicule du brevet:
12.07.89

(51) Int. Cl.⁴: **G 01 S 13/87**

(21) Numéro de dépôt: 85401544.3

(22) Date de dépôt: 26.07.85

(54) **Système d'exploitation de plusieurs radars voisins.**

(30) Priorité: 31.07.84 FR 8412134

(43) Date de publication de la demande:
19.02.86 Bulletin 86/8

(45) Mention de la délivrance du brevet:
12.07.89 Bulletin 89/28

(84) Etats contractants désignés:
DE GB IT NL

(56) Documents cité:
US-A-3 454 944

INTERNATIONAL CONFERENCE RADAR-82, 18-20
octobre 1982, pages 169-173, The Institution of
Electrical Engineers, Londres, GB; W.G. BATH:
"Association of multisite radar data in the
presence of large navigation and sensor alignment
errors"
IEEE TRANS. ON AEROSPACE AND ELECTRONICS
SYSTEMS, vol. AES-15, no. 4, juillet 1979, pages 555-
563, New York, US; A. FARINA et al.: "Multiradar
tracking system using radial velocity
measurements"
IEEE TRANSACTIONS ON ANTENNAS AND
PROPAGATION, vol. AP-24, no. 5, septembre 1976,
pages 707-720, New York, US; L.J. GRIFFITHS:
"Time-domain adaptive beamforming of HF
backscatter radar signals"

(73) Titulaire: THOMSON- CSF, 51, Esplanade du
Général de Gaulle, F-92800 Puteaux (FR)

(72) Inventeur: Guilhem, Robert, THOMSON- CSF SCPI
173, bld Haussmann, F-75379 Paris Cedex 08 (FR)

(74) Mandataire: Lepercque, Jean, THOMSON- CSF
SCPI, F-92045 PARIS LA DEFENSE CEDEX 67 (FR)

(56) Documents cité: (suite)
M.I.Skolnik, Introduction to Radar Systems, Mac-
Graw-Hill, Tokyo (JP), 1980, pp. 280-283

## Description

Cette demande de brevet concerne un système d'exploitation particulier d'émetteurs-recepteurs radars à très grande portée. L'invention peut être étendue à d'autres secteurs techniques pour lesquels on cherche à optimiser l'exploitation d'émetteurs-récepteurs multiples par l'obtention de certaines relations de phase tant entre les signaux d'émission que ceux de réception.

Jusqu'à maintenant, les performances exigées des systèmes radars pouvaient être satisfaites par l'utilisation d'un seul radar. Cependant, l'amélioration des systèmes radars a été suivie rapidement par une augmentation de puissance des systèmes de brouillage et de leur efficacité. De plus, il s'avère nécessaire de détecter des cibles de plus en plus éloignées et de très faible surface équivalente. C'est pourquoi, on a été amene à concevoir un système radar plus performant mettant en oeuvre, non pas seulement un radar, mais plusieurs radars.

Ce système prenant pour base connue le document "INTERNATIONAL CONFERENCE RADAR - 82", 18 - 20 octobre 1982, pages 169 - 173.

L'invention concerne donc un système d'exploitation de N radars voisins, chaque radar comportant des moyens d'émission, des moyens de réception et des moyens d'antenne reliés aux moyens d'émission et de réception par un duplexeur caractérisé en ce que les moyens d'émission sont agencés pour émettre des signaux de même frequence, ayant chacun une référence de phase propre et les relations entre ces références de phase étant quelconques, suivant des faisceaux, d'axes parallèles, confondus à grande distance à l'intérieur d'une zone commune, la distance séparant les antennes des radars voisins, pris deux à deux, étant nettement supérieure à la plus grande des ouvertures d'antennes des radars considérés, de manière qu'à l'intérieur de la zone commune, il existe des directions selon lesquelles les signaux émis par tous les radars sont sensiblement en phase et en ce que les moyens de réception comportent des moyens de mise en phase des signaux reçus de manière à réaliser d'addition vectorielle de ces signaux.

L'invention sera mieux comprise et diverses autres caractéristiques apparaîtront à l'aide de la description qui suit, faite en se référant aux figures annexées parmi lesquelles:

- la figure 1 consiste en une figure explicative du système de l'invention;
- la figure 2 illustre un exemple de disposition de trois radars selon les trois sommets d'un triangle;
- les figures 3 et 4 illustrent des exemples de dispositions de cinq radars selon les sommets de deux triangles;
- les figures 5 et 6 représentent des exemples de réalisation permettant de mettre en oeuvre le système de l'invention;
- les figures 7 et 8 illustrent des variantes de dispositions radars;
- la figure 9 représente un exemple de réalisation d'un circuit de déphasage.

Selon l'invention, on dispose plusieurs radars de telle façon que:

- Dans certaines directions, les champs émis à la même fréquence par les p radars sont sensiblement en phase, ces directions étant comprises dans l'angle solide commun aux faisceaux-radars orientés parallèlement. Ceci pourra être obtenu par un choix judicieux de l'emplacement approximatif des radars, sans aucune contrainte sur les phases d'émission. On réalise ainsi un système complexe de franges d'interférence à l'émission dont une au moins a pratiquement la brillance maximale possible; la direction du ou des maximums de brillance ne sont d'ailleurs pas nécessairement connue.
- On fait alors à la réception, l'addition vectorielle des champs diffractés par une cible avec des relations de phase telles que le système de franges d'interférences à la réception coïncide pratiquement avec celui existant à l'émission. Une cible fortement éclairée à l'émission renvoyant alors un écho qui est reçu avec la sensibilité maximale.
- De plus, on modifie un nombre de fois suffisant mais réduit (fonction du nombre p de radars), les relations de phases entre les émetteurs radars pour décaler le système de franges d'interférences de façon à effectuer un balayage optimal par pas des directions de l'espace situées à l'intérieur de l'angle solide commun aux faisceaux radars.
- Enfin, on modifie corrélativement la phase entre les récepteurs de façon à retrouver la coïncidence des systèmes de franges d'interférences à l'émisson et à la réception.

L'exposé du fonctionnement du système de l'invention va être fait plus aisément en considérant, d'abord, 2 radars seulement; on généralisera ensuite en passant à p radars (p > 2).

Par la suite de la présentation, il est nécessaire d'introduire la notion de phase, du signal d'émission, des signaux de réception et d'un signal de test; ceci, dans un plan de référence $P_i$ défini pour chaque radar i; ce plan de référence est de préférence placé au voisinage du duplexeur côté antenne, de manière analogue pour chaque radar. La référence de phase peut être différente pour chaque radar, mais alle ast impérativement à la même fréquence pour tous les radars, cette fréquence étant la fréquence commune d'émission; les écarts d'une référence à l'autre ne peuvent ainsi être qu'un déphasage constant (dont il y a lieu de tenir compte dans le calcul de la correction de phase $\Delta \emptyset$ comme on le verra par la suite).

Pour chaque radar i, la référence est en fait une sinusoïde fictive $S_i$ à la fréquence d'émission $f_e$

qui résulterait du battement entre une oscillation locale en hyperfréquence $f_H$ et une oscillation locale en fréquence intermédiaire $f_I$; cette sinusoïde $S_i$ est fictive car suivant les méthodes bien connues de l'homme de l'art, une mesure de phase est faite de préférence à la sortie d'un amplificateur en fréquence intermédiaire après un changement de fréquence utilisant l'oscillation locale susdite à la fréquence $f_H$. Dans ces conditions, le résultat de la mesure ne donne la phase du signal qu'à une constante $K_{ij}$ près qui dépend notamment de la réalisation du changement de fréquence et de l'amplificateur en fréquence intermédiaire. Mais l'influence de cette constante disparaît lorsque l'on mesure des différences de phase, à la sortie des dispositifs qui sont symétriques, la différence de phase mesurée en fréquence intermédiaire correspondant exactement à la différence de phase des signaux eux-mêmes.

Pour deux radars supposés identiques, R1 et R2, émettant une impulsion à la même fréquence $f_e$, simultanément et dans la même direction, l'intensité du champ résultant au point M à grande distance peut être représentée par le produit de deux fonctions H(M).G(M), l'approximation étant d'autant meilleure que le point M est plus éloigné des radars. Dans ce produit:

- H(M) représente le réseau hyperbolique bien connu des franges d'interférences de foyers R1 et R2; H(M) dépend de la différence de phase entre les émissions de R1 et de R2 et est une fonction proportionnelle à l'inverse de la distance r du point M à R1 (et également à R2 approximativement);
- G(M) représente le rayonnement de chacune des antennes prises séparément; G(M) ne dépend pas du radar (R1 ou R2) à grande distance parce que les antennes sont supposées identiques et orientées dans la même direction. L'atténuation du champ en fonction de la distance est prise en compte dans l'une des deux fonctions seulement, par exemple ici H(M).

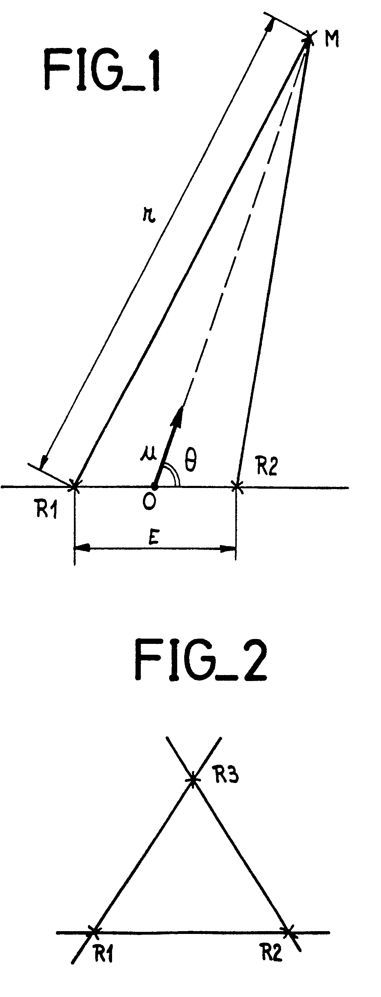

Pour obtenir que daux radars R1 at R2, tels que représentés sur la figure 1, émettent des faisceaux fournissant une concordance da phase à un point M éloigné situé dans l'angle solide commun aux deux faisceaux radars, il suffit que l'espacement E des radars, mesuré perpendiculairement à la direction des faisceaux-radars soit k fois plus grand que l'envergure e des antennes ($K \geqslant 3$) par exemple. En effet:

$$E = |R_1R_2|.\sin \theta$$

avec

$$\theta = |\overrightarrow{R_1R_2}, \overrightarrow{u}|$$

u: vecteur unité de la direction des faisceaux radars orientés parallèlement.

Deux franges brillantes voisines ont des directions asymptotiques définies par des cônes de demi-angle au sommet $\theta_1$ et $\theta_2$ tels que:

$$|R_1R_2| |\cos \theta_1 - \cos \theta_2| = \lambda$$

soit

$$|\theta_1 - \theta_2| * \frac{\lambda}{R_1R_2\sin\theta} = \epsilon$$

La condition $k \geqslant 3$ donne

$$\epsilon \leqslant \frac{\lambda}{3e}$$

Cela montre qu'il existe au moins 3 franges brillantes dans le faisceau-radar dont la largeur à 3 dB est voisine de $\frac{\lambda}{e}$.

Compte tenu de l'influence de sin $\theta$, il peut être difficile d'obtenir un bon résultat pour des petites valeurs de $\theta$, c'est-à-dire pour des directions de rayonnement proches de la droite $R_1R_2$. Une détection de bonne qualité est néanmoins possible dans la direction de la droite $R_1R_2$ et dans les directions voisines.

Dans les directions proches de la droite R1, R2 l'interfrange devient très grand à cause de la petite valeur de sin $\theta$; pour ces directions, l'interfrange est supérieur à la largeur du faisceau commun aux 2 radars, il se peut qu'une combinaison de phase 0,0 ou 0,1 (comme défini ci-après) corresponde à une frange sombre mais dans ce cas l'autre combinaison correspond à une frange brillante. Il existe aussi des cas (dépendants du déphasage initial $_{1,2}$) pour lesquels les combinaisons 0,0 et 0,1 correspondent l'une comme l'autre à des valeurs intermédiaires pour l'intensité des franges.

Comme on l'a vu précédemment, on doit effectuer à la réception, l'addition vectorielle des champs diffrectés. Pour que le trattement soit optimal, compte tenu du bruit thermique ou du brouillage supposé fortement décorrélé entre les antennes, il faut effectuer l'addition vectorielle des signaux élémentaires reçus par chacun des raders avec une correction de phase convenable $\Delta\theta$; $\Delta\theta$ représente la correction de phase introduite per exemple dans le récepteur du radar R2 par rapport su récepteur du radar R1; sa valeur doit être telle que, pour un écho provenant d'un objectif situé au centre d'une frange brillante de H(M), las signaux reçus par chacun des radars soient mis en phase avant leur addition. Lorsque les récepteurs-radars ont même déphasage entre eux et même référence de phase, la mise en phase des signaux est obtenue en rendant la valeur absolue des $\Delta\theta$ égale à la valeur absolue du déphasage relatif des 2 radars à l'émission. Le signe de $\Delta\theta$ est choisi pour que le récepteur qui est en avance de phase à la réception corresponde au radar ayant l'avance de phase à l'émission. Dans ces conditions, le vecteur somme résultant est maximisé; on dira, dans la suite, qu'il y a coïncidence des franges d'interférence à l'émission et à la réception. En effet, H(M) est alors, proportionnel à l'intensité de l'écho reçu après addition vectorielle, M étant cette fois-ci la position d'un objectif qui rayonnerait une puissance unitaire; lorsque $\Delta\theta$ a la valeur convenable, l'écho d'un objectif situé au centre d'une frange brillante correspond à un rapport signal/bruit qui est $2^3$ fois plus grand que celui qui serait obtenu avec un seul émetteur-récepteur, c'est-à-dire avec un seul radar. Il y a en effet:

- à l'illumination (émission) un gain de $2^2$ (en puissance) dû à l'addition des champs,
- à la réception, un gain de 2 sur le rapport signal/bruit d'un seul radar, si les bruits des 2 radars sont décorrélés, ce qui est pratiquement toujours le cas pour le bruit thermique et peut se produire, partiellement au moins, pour le bruit induit par un brouillage.

En présence d'un brouillage actif dans les conditions les plus mauvaises qui donneraient des bruits totalement corrélés pour les 2 radars, le gain global serait ramené à $2^2$ et resterait néanmoins très important; il correspondrait alors uniquement au gain à l'émission.

Comme cela a été dit plus haut, on modifie un nombre de fois suffisant mais réduit (fonction du nombre p de radars) les relations de phase entre les émetteurs radars pour décaler le système de franges d'interférences entre les radars. Ceci a pour but de faire effectuer par les franges brillantes un balayage par pas des directions de l'espace situées à l'intérieur du faisceau commun aux radars. Cette modification de phase est faite soit d'impuision à impulsion soit de rafale à rafale lorsque les radars effectuent un traitement de signal qui utilise des techniques de cohérence (intégration cohérente, filtrage Doppler, etc....)

Le cas le plus simple est celui où il n'existe que 2 radars; on peut alors modifier une seule fois la relation de phase entre les 2 émetteurs en passant de $\phi$ à $\phi + \pi$; ceci permet de permutter le réseau de franges brillantes et le réseau de franges sombres; de cette façon, on crée un balayage grossier des directions de l'espace situées à l'intérieur du faisceau commun aux deux radars. Si l'on veut améliorer la finesse du balayage, on passera de $\phi$ à $\phi + \frac{2\pi}{3}$ puis à $\phi + \frac{4\pi}{3}$. Mais cela nécessitera 3 émissions (ou 3 rafales) successives.

Dans le cas de 3 radars, le balayage grossier des directions de l'espace situées à l'intérieur du faisceau commun aux 3 radars correspond à 4 émissions (ou 4 rafales) successives définies comme suit:

soit $\phi_{12}$ et $\phi_{13}$ les déphasages respectifs entre les émetteurs 1 et 2, puis 1 et 3 au cours de la première impulsion (ou de la première rafale).

La deuxième impulson (ou rafale) consiste à:
1. maintenir constant $\phi_{12}$
2. passer de $\phi_{13}$ à $\phi_{13} + \pi$.

La troisième impulsion (en rafale) consiste à:
1. passer de $\phi_{12}$ à $\phi_{12} + \pi$
2. maintenir constant $\phi_{13}$.

La quatrième impulsion (ou rafale) consiste à:
1. passer de $\phi_{12}$ à $\phi_{12} + \pi$
2. passer de $\phi_{13}$ à $\phi_{13} + \pi$

On peut schématiquement représenter les 4 émissions (ou rafales) successives par les nombres binaires:

| 0 | 0 | 0 |
|---|---|---|
| 0 | 0 | 1 |
| 0 | 1 | 0 |
| 0 | 1 | 1 |

La première colonne à gauche (toujours 0) correspond au radar n° 1; la deuxième colonne correspond au radar 2; la troisième colonne au radar 3.

Le chiffre 0 placé dans la 2ème colonne indique que la relation de phase entre les 2 premiers radars est maintenue constante, sa valeur (quelconque) est appelée $\phi_{12}$; le chiffre 1 placé dans la 2ème colonne indique que la valeur précédente passe de $\phi_{12}$ à $\phi_{12} + \pi$. La 3ème colonne indique le déphasage entre le radar n° 3 et le radar 1; le chiffre 0 indique que le déphasage entre les 2 radars est maintenu constant à sa valeur initiale (quelconque) $\phi_{13}$; le chiffre 1 indique que le déphasage passe de la valeur $\phi_{13}$ à $\phi_{13} + \pi$.

On considère maintenant un système à un nombre quelconque p de radars.

Soit $R_1$, $R_2$, $R_3$, $R_4$,.... ces radars et $H_1$, $H_2$, $H_3$, $H_4$ les champs émis correspondants.

Une solution consiste à placer les radars de façon que:

$$|R_1 R_3| = k' |R_1 R_2| \text{ avec } k' > 3$$
$$|R_1 R_4| = k' k'' |R_1 R_2| \text{ avec } k'' > 3$$

etc...

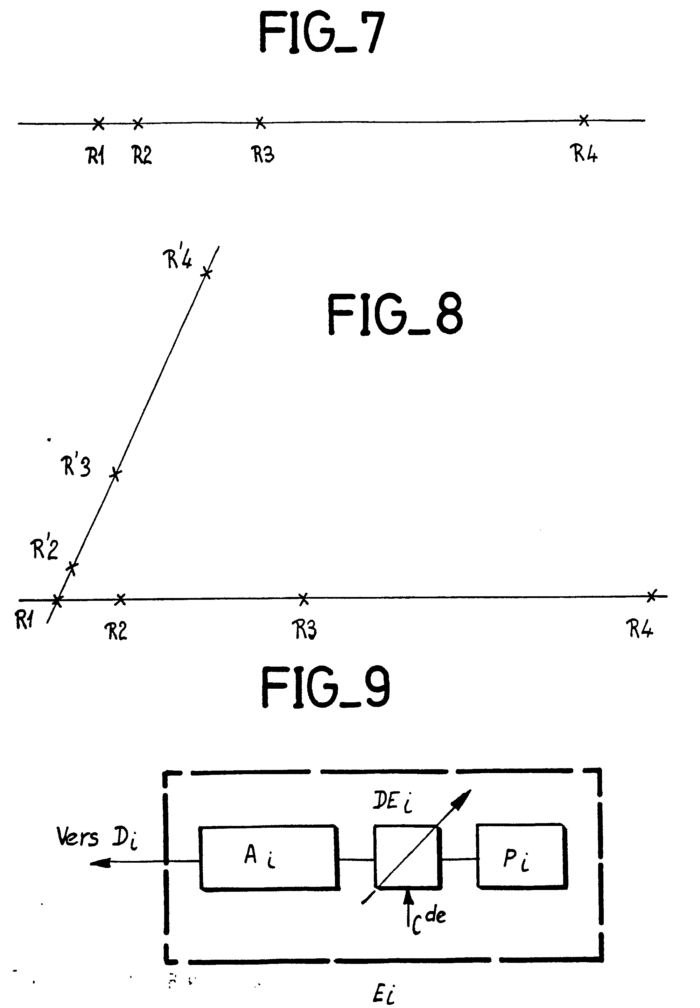

Pour simplifier l'exposé, on se placera dans le cas où tous les radars sont alignés et rangés par indice croissant sans limiter l'invention à cette hypothèse (cf. figure 7).

On voit que l'interfrange entre le radar 1 et le radar i est d'autant plus fine que la valeur de i est plus grande. Dans ces conditions, lorsque l'on se déplace à très grande distance sur une sphère S ayant $R_1$ pour centre et ceci dans un plan passant par la droite $R_1 R_2 R_3$, la phase du champ $H_1$ reste constante et la vitesse de rotation de phase du champ $H_i$ est d'autant plus rapide que i est plus grand. On conçoit que pour des valeurs suffisantes des valeurs de k', k'',... k(p - 2), il soit possible de trouver sur la sphère S des points pour lesquels tous les champs $H_i$ sont en phase à $\pm 10°$ ou $\pm 30°$ près par exemple; la condition I est alors pratiquement obtenue pour ces points et leur voisinage.

La généralisation au cas de p radars $R_1$, $R_2$,... $R_i$,...ne présente pas de difficulté; on peut prendre par exemple le radar $R_1$ comme référence et introduire dans les chaînes de réception des déphasages différentiels $\Delta\theta_{12}$, $\Delta\theta_{13}$, $\Delta\theta_{14}$,... mesurés par rapport au radar $R_1$; la valeur des $\Delta\theta_{1i}$ est déterminée comme précédemment à partir de la mesure du déphasage de l'émission de chacun des radars par rapport à $R_1$.

Dans le cas d'une variation de phase de $\pi$ radians d'une émission à l'autre pour certains radars, on réalise, par exemple, une suite de $2^{p-1}$ émissions (ou rafales), les variations de phase étant schématisées par les $2^{p-1}$ nombres binaires suivants:

radar

| n° 1 | n° 2 | | p-2 | p-1 | n°p |
|------|------|-----|-----|-----|-----|
| 0 | 0 | ... | 0 | 0 | 0 |
| 0 | 0 | ... | 0 | 0 | 1 |
| 0 | 0 | ... | 0 | 1 | 0 |
| 0 | 0 | ... | 0 | 1 | 1 |
| 0 | 0 | ... | 1 | 0 | 0 |
| 0 | 0 | ... | 1 | 0 | 1 |
| 0 | 0 | ... | 1 | 1 | 0 |
| 0 | 0 | ... | 1 | 1 | 1 |
| 0 | 1 | ... | 0 | 0 | 0 |
| 0 | 1 | ... | 0 | 0 | 1 |
| 0 | 1 | ... | 0 | 1 | 0 |
| 0 | 1 | ... | 0 | 1 | 1 |
| 0 | 1 | ... | 1 | 0 | 0 |
| 0 | 1 | ... | 1 | 0 | 1 |
| 0 | 1 | ... | 1 | 1 | 0 |
| 0 | 1 | ... | 1 | 1 | 1 |

Dans la colonne i la présence d'un 0 indique que l'on a maintenu constant le déphasage $\phi_{1i}$ entre l'émetteur n° 1 et l'émetteur n° i, la présence d'un 1 indique que le déphasage entre les 2 radars considérés est passé de $\phi_{1,i}$ à $\phi_{1,i} + \pi$.

Dans le cas de 2 radars avec un balayage en 3 pes, les émissions (ou rafales) successives sont représentées par les nombres suivants écrits dans un système à base 3.

| 0 | 0 (déphasage $\phi_{1,2}$) |
|---|---|
| 0 | 1 (déphasage $\phi_{1,2} + \frac{2\pi}{3}$) |
| 0 | 2 (déphasage $\phi_{1,2} + \frac{4\pi}{3}$) |

Pour p radars et un balayage en 3 pas pour chaque radar, les émissions (en rafales) successives sont symbolisées par

| 0 | 0 | ... | 0 | 0 |
|---|---|-----|---|---|
| 0 | 0 | ... | 0 | 1 |
| 0 | 0 | ... | 0 | 2 |
| 0 | 1 | ... | 0 | 0 |
| 0 | 1 | ... | 0 | 1 |
| 0 | 1 | ... | 0 | 2 |
| 0 | 2 | ... | 0 | 0 |
| 0 | 2 | ... | 0 | 1 |
| 0 | 2 | ... | 0 | 2 |

Pour la colonne i, la présence d'un 0 indique que la déphase du ième radar est maintenu constante (égal à $\phi_{1,i}$ quelconque), la présence d'un 1 indique que $\phi_{1,i}$ est remplacé par $\phi_{1,i} + \frac{2\pi}{3}$ la présence d'un 2 indique que $\phi_{1,i}$ est remplacé par $\phi_{1,i} + \frac{4\pi}{3}$.

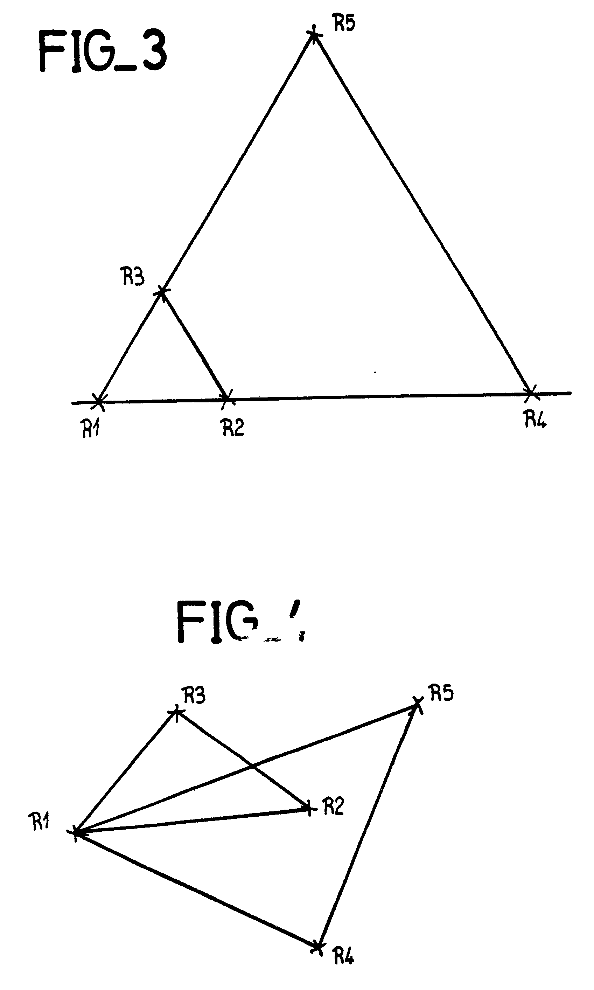

Selon une variante de l'invention, on prévoit trois radars R1, R2, R3 qui, au lieu d'être alignés, sont placés aux sommets d'un triangle. A titre d'exemple, comme celà est représenté sur la figure 2, ce triangle peut être équilatéral.

Le volume de recherche et de poursuite est alors centré de préférence sur la normale au plan du triangle qui passe par l'horthocentre du triangle.

L'existence des franges très brillantes, correspondant pratiquement à la mise en phase des 3 champs, est démontrable. En effet, d'une part, le système d'interférence entre $R_1$ et $R_2$ est un réseau hyperboloïde de révolution autour de la droite $R_1R_2$, d'autre part le système d'interférence entre $R_1$ et $R_3$ est un réseau hyperboloïde de révolution autour de la droite $R_1R_3$. Ces deux réseaux se coupent dans l'espace, il existe nécessairement des points (en fait des directions asymptotiques) où les trois champs émis par les radars sont en phase.

Selon une autre variante de l'invention représentée sur la figure 3, on combine la disposition en triangle précédente avec des dispositions alignées. C'est ainsi que cinq radars R1 à R5 sont disposés aux sommets de deux triangles équilatéraux ayant en commun un angie au sommet, l'angle R1 par exemple. Les radars R1, R3, R5 sont donc alignés ainsi que les radars R1, R2 et R4.

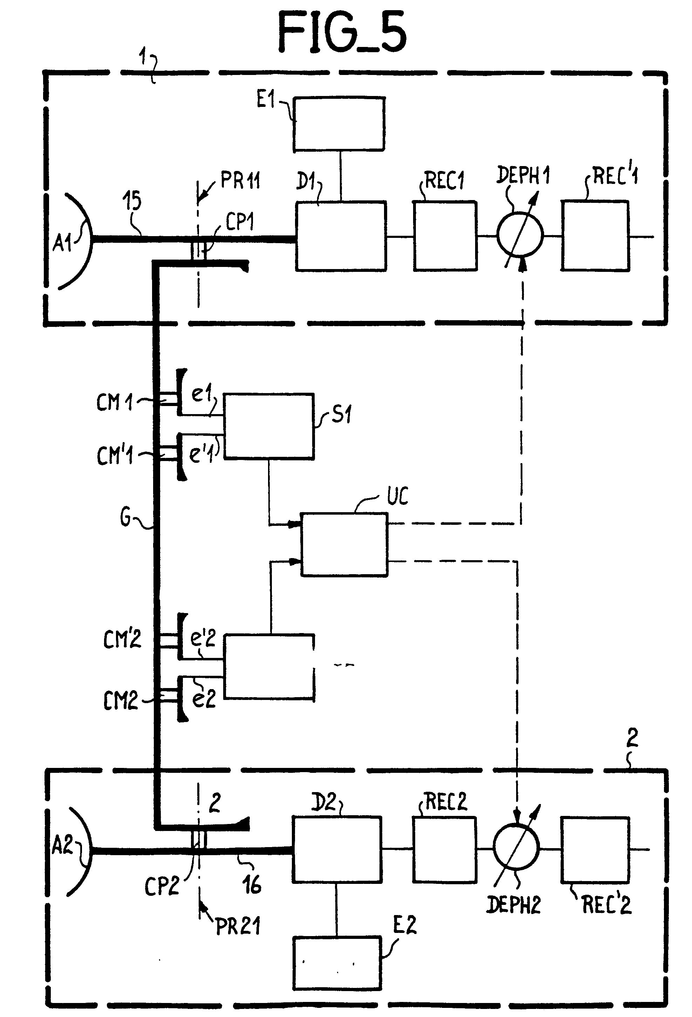

On peut également, selon une variante de l'invention représentée sur la figure 4, disposer les radars aux sommets de deux triangles quelconques ayant un sommet commun, mais ayant des dimensions très différentes.

Une autre variante de l'invention représentée en figure 8, consiste à utiliser deux groupes de radars alignés R1, R2, R3, R4 et R1, R'2, R'3, R'4, les droites R1, R2, R3 R4 et R1, R'2, R'3, R'4 formant entre elles un angle compris entre 50° et 180° - 30° = 150° par exemple; les distances entre les radars (R1, R2), (R1, R3), (R1, R4) étant soumises aux conditions:

$$|R1R3| = k' |R1R2| \text{ avec } k' > 3$$
$$|R1R4| = k'k'' |R1R2| \text{ avec } k'' > 3$$

de même

$$|R1,R'3| = 1' |R1R'2| \text{ avec } 1' > 3$$
$$|R1,R'4| = 1'1'' |R1R'2| \text{ avec } 1'' > 3$$

En se reportant à la figure 5, on va maintenant décrire un exemple de circuits permettant de mettre en oeuvre l'invention.

Ces circuits sont appliqués au cas de deux radars. Ils permettent de:

1. mesurer le déphasage entre les signaux d'émission.

2. introduire dans les chaînes de réception le déphasage différentiel de compensation $\Delta\phi$ défini plus haut en valeur absolue et signe.

3. sommer les signaux résultant après correction de la phase.

Dans l'exemple donné, les ensembles de réception sont supposés avoir deux à deux des temps de transmission égaux et des déphasages égaux entre leurs entrées et leurs sorties correspondantes telles qu'elles sont définies pour la comparaison des radars deux à deux.

L'égalité des temps de transmission et des déphasages entre les entrées et les sorties correspondante peut être obtenu soit directement par construction, soit indirectement par compensation après mesure des écarts, cette mesure étant faite par injection d'un signal de test dans chaque chaîne.

L'homme de l'art sait obtenir ces égalités notamment dans l'exploitation des techniques monopulses.

La mesure de la différence de phase entre les émissions peut être faite suivant la figure 5 où l'on trouve deux radars 1 et 2 comportant chacun un émetteur (E1, E2), un récepteur (REC1, REC2), un duplexeur (D1, D2) connectant l'émetteur et le récepteur à une antenne (A1, A2). Chaque radar possède en outre, selon l'invention, dans la chaîne de réception, un déphaseur (DEPH1, DEPH2) recevant de l'amplificateur (REC1, REC2) le signal préamplifié et le transmettant à l'amplificateur (REC'1, REC'2) après introduction d'un déphasage commandable.

Les deux radars sont couplés par deux coupleurs directifs (CP1, CP2) à un guide d'onde G unique.

Associé au radar 1, un premier système de mesure de déphasage S1 à deux entrées e1 et e'1 couplées au guide d'onde G par deux coupleurs directifs CM1 et CM'1 convenablement orientés.

De même, associé à l'autre radar 2, un deuxième système de mesure de déphasage S2 possède deux entrées e2 et e'2 couplées, par des coupleurs directifs (CM2 et CM'2) convenablement orientés, au guide d'onde G.

La longueur électrique de la voie reliant les coupleurs directifs CP1 et CM1 est égale à celle de la voie reliant les coupleurs directifs CP2 et CM2. La liaison CM1-CM'1 est identique à la liaison CM2-CM'2.

De même la longueur électrique de la voie reliant le coupleur directif CP1 à la sortie du récepteur REC'1 est égale à celle de la voie reliant le coupleur CP2 à la sortie du récepteur REC'2 et cela lorsque les deux déphaseurs DEPH 1 et DEPH 2 sont en position de déphasage nul.

Les systèmes de mesure de phase S1, S2 permettent de mesurer les différences de phase des signaux à l'émission des deux radars 1 et 2. Les résultats de ces mesures sont transmis à un circuit de différence et de commande UC. Ces circuits permettent d'obtenir la valeur de la différence de phase $\emptyset_2 - \emptyset_1$ des signaux à l'émission. Plus précisément, ils permettent d'obtenir la valeur $2(\emptyset_2 - \emptyset_1)$. En fonction de la valeur de déphasage obtenue, les circuits UC commandent les déphaseurs DEPH1 et DEPH2. On introduit ainsi un déphasage différentiel comme celà va être décrit ci-après.

Le signal d'émission de chacun des radars est envoyé vers l'autre par l'intermédiaire d'un guide unique G où les deux signaux d'émission se propagent en sens inverses. Ces signaux d'émission sont prélevés sur les radars 1 et 2 par les coupleurs directifs respectifs CP1 et CP2 placés sur la voie commune à l'émission et à la réception de chaque radar. Pour la suite de la description, il est commode de considérer, pour chaque coupleur CP1 et CP2, un plan de référence respectivement PR11 et PR21, ces deux plans de référence étant situés de manière analogue à l'intérieur des coupleurs. Ces deux plans définissent l'entrée des voies de réception de chaque radar.

A chaque extrémité du guide G se trouvent placés deux systèmes S1 et S2 de mesure de déphasage. Ces deux systèmes sont identiques. Le système S1 mesure le déphasage M1 entre le signal de l'émission locale du radar 1 et le signal de l'émission du radar 2 reçu par l'intermédiaire du guide G. A l'inverse, le système de mesure S2 mesure le déphasage M2 entre le signal de l'émission locale du radar 2 et le signal de l'émission du radar 1 reçu par l'intermédiaire du guide G.

Les deux systèmes de mesure S1 et S2 prélèvent les signaux soumis aux mesures par l'intermédiaire des coupleurs respectifs CM1, CM'1 et CM2, CM'2. Le coupleur CM1 fournit sur l'entrée e1 du système de mesure S1, le signal local du radar 1. Le coupleur CM'1 fournit à l'entrée e'1 du système de mesure S1, le signal d'émission du radar 2 transmis par le guide G. De la même façon, le coupleur CM2 fournit à l'entrée e2 du système S2, le signal local d'émission du radar 2 et le coupleur CM'2 fournit à l'entrée e'2, le signal d'émission du radar 1 transmis par le guide G.

Les deux ensembles de coupleurs CP1, CM1, CM'1 d'une part et CP2, CM2 et CM'2 d'autre part sont identiques ainsi que leurs connexions internes. Tous les coupleurs directifs sont munis d'une charge adaptée dans la quatrième voie conformément aux règles de l'art.

Le système de mesure S1 mesure donc la différence de phase $M1 = \emptyset_1 - \emptyset_2$.

$\emptyset_1$ étant la phase du signal d'émission du radar 1,

$\emptyset'_2$ étant la phase du signal d'émission du radar 2 reçu par le guide G.

Le système de mesure S2 mesure la différence de phase $M2 = \emptyset_2 - \emptyset'_1$.

$\emptyset_2$ étant la phase du signal d'émission du radar 2,

$\emptyset'_1$ étant la phase du signal d'émission du radar 1 reçu par le guide G.

Pour des raisons de symétrie $\emptyset_1$ et $\emptyset_2$ représentent à une même constante près les phases d'émission respectivement dans les plans de référence PR1 et PR2. Pour des raisons de symétrie, on a:

$$\emptyset'_2 + \emptyset_2 + \Delta \psi$$
$$\text{et} \quad \emptyset_1 = \emptyset_1 + \Delta \psi$$

avec $\Delta \psi$ représentant le déphasage dû au guide d'onde G.

Des quatres égalités précédentes, on déduit:

$$M_1 - M_2 = 2(\emptyset_1 - \emptyset_2)$$

Grâce aux propriétés de symétrie et à l'existence d'un guide de liaison unique G on a mesuré le déphasage entre les émissions des radars 1 et 2 dans les plans de référence PR1 et PR2 ceci sans avoir à connaître la longueur du guide G.

En application du principe de retour inverse, la réception des signaux renvoyés par une cible située sur une frange brillante se fera avec le même déphasage relatif dans les plans de référence.

Le radar dont l'émission est en avance de phase recevra un signal en retard de phase. Pour mettre en phase les 2 signaux reçus par les radars 1 et 2, il y a donc lieu de donner une avance de phase au récepteur correspondant à l'émission en avance de phase.

La figure 5 représente les déphaseurs DEPH1 et DEPH2 insérés entre deux récepteurs REC1, REC'1 pour l'un des déphaseurs et REC2, REC'2 pour l'autre déphaseur. En réalité, ces couples de récepteurs REC1 - REC'1 et REC2 - REC'2 forment chacun un organe unique, un déphaseur (DEPH1, DEPH2) étant placé à l'intérieur de chaque organe.

Ces déphaseurs permettent d'effectuer une compensation du déphasage émission, mesuré comme cela a été décrit précédemment, par un déphasage à la réception.

Un circuit de calcul de différence et de commande UC permet en fonction des résultats de mesure M1 et M2 effectués par les sytèmes de mesures S1 et S2 d'effectuer la différence M1 et M2 et de commander en conséquence les déphaseurs DEPH1 et DEPH2.

On notera que le réglage de l'égalité des temps de transfert entre les entrées et les sorties des deux chaînes de réception doit se faire avec des déphasages nuls (ou rigoureusement égaux) des déphaseurs DEPH1 et DEPH2, c'est-à-dire pour des temps de transfert et des déphasages égaux pour chaque chaîne.

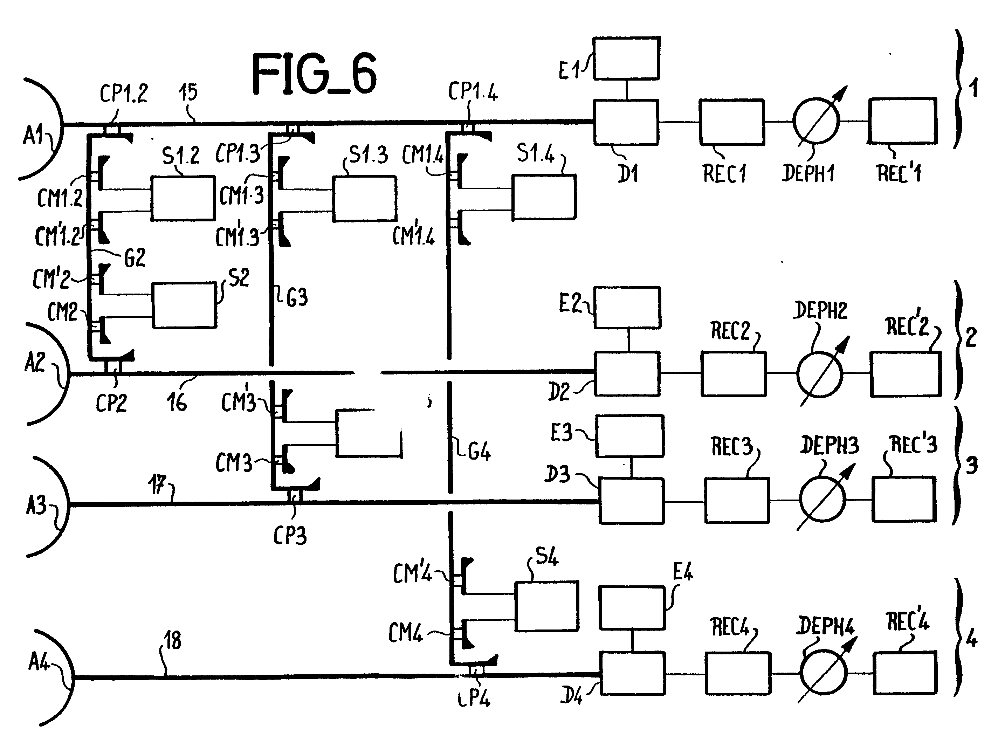

Le système de mesure de déphasage conforme à l'invention peut comporter un nombre n de radars. A titre d'exemple, la figure 6 représente un système à quatre radars.

La mesure des déphasages à l'émission est faite par des comparaisons séparées qui prennent toutes comme référence le radar 1 et utilisent respectivement des guides G2, G3, G4 pour propager dans les 2 sens les signaux à comparer. Le couplage de G2, G3, G4 est fait respectivement au radar 1 par les coupleurs CP 1.2, CP 1.3 et CP 1.4. Les couplages respectifs aux radars 2, 3 et 4 sont faits par les coupleurs CP2, CP3 et CP4.

Pour conserver la symétrie des radars deux à deux il est préférable de placer sur la voie émission-réception du radar 1 autant de coupleurs directifs qu'il y a d'autres radars à comparer et à associer. L'égalité des temps de transfert et des déphasages entrée-sortie à la réception est réalisée comme suit:

- pour les radars 1 et 2, on réalise l'égalité des chemins électriques suivants:
  coupleur CP 1.2, sortie de REC'1 = coupleur CP2, sortie de REC'2,
- pour les radars 1 et 3, on réalise l'égalité des chemins électriques suivants:
  coupleur CP 1.3, sortie REC'1 = coupleur CP3, sortie REC'3,
- pour les radars 1 et 4, on réalise l'égalité des chemins électriques suivants:
  coupleur CP 1.4, sortie REC'1 = coupleur CP4, sortie REC'4.

A titre général, comme décrit en se reportant à la figure 5, les chemins homologues d'un couple de radars, tel que le couple 1-2 par exemple, sont prévus de longueurs égales.

A chaque guide d'onde G2, G3, G4 sont couplés deux systèmes de mesure de déphasages similaires aux systèmes S1 et S2 de la figure 5.

Par exemple, au guide d'onde G3, sont couplés, d'une part, un système de mesure de déphasage S 1.3 par des coupleurs CM 1.3 et CM' 1.3 et, d'autre part, un système de mesure de déphasage S3 par des coupleurs CM3 et CM'3.

Les deux systèmes de mesure de déphasages associés à un même guide d'onde fournissent leurs résultats de mesure à un circuit de différence et de commande non représenté sur la figure 6 et permettent de commander les déphaseurs des radars associés à ce guide d'onde.

Le fonctionnement du système de la figure 6 est donc identique à celui décrit pour les radars 1 et 2 de la figure 5 en considérant séparément le fonctionnement des couples de radars 1-2, 1-3 et 1-4.

Il est bien évident qu'un fonctionnement avec un plus qrand nombre de radars serait similaire en prévoyant également des couples de radars.

La figure 9 indique la manière d'introduire les déphasages $\pi$ ou $\frac{2\pi}{3}$ et $\frac{4\pi}{3}$ dans les émetteurs E2, E3,... etc par rapport à l'émetteur E1. Les émetteurs sont généralement terminés par un tube amplificateur de puissance $A_i$ si bien qu'il est préférable d'introduire les déphasages ci-dessus à bas niveau à l'entrée de l'amplificateur de puissance par un déphasage commandé $DE_i$ à la sortie du pilote Pi. La référence de fréquence des pilotes P1, P2, Pi... peut être unique donc commune; mais il est possible également que chaque pilote Pi ait sa propre référence de fréquence (par exemple, une horloge atomique) telle que sa grande stabilité évite tout glissement de fréquence pendant la durée des émissions ou des rafales qui doivent être faites à la même fréquence c'est-à-dire pendant les $2^{p-1}$ ou $3^{p-1}$ émissions ou rafales successives qui assurent le balayage par pas de l'espace à l'intérieur du faisceau commun aux radars.

**Revendications**

1. Système d'exploitation de N radars voisins, chaque radar comportant des moyens d'émission (E1, E2), des moyens de réception (REC1, REC2) et des moyens d'antenne (A1, A2) reliés aux moyens d'émission et de réception par un duplexeur (D1, D2) caractérisé en ce que les moyens d'émission sont agencés pour émettre des signaux de même fréquence, ayant chacun une référence de phase propre et les relations entre ces références de phase étant quelconques, suivant des faisceaux, d'axes parallèles, confondus à grande distance à l'intérieur d'une zone commune, la distance séparant les antennes (A1, A2) des radars voisins, pris deux à deux (R1-R2 ou R2-R3), étant nettement supérieure à la plus grande des ouvertures d'antennes des radars considérés, de manière qu'à l'intérieu r de la zone commune, il existe des directions selon lesquelles les signaux émis par tous les radars sont sensiblement en phase et en ce que les moyens de réception comportent des moyens de mise en phase (DEPH1, DEPH2) des signaux reçus de manière à réaliser l'addition vectorielle de ces signaux.

2. Système d'exploitation de plusieurs radars voisins selon la revendication 1, caractérisé en ce qu'il comporte des moyens permettant de mesurer le déphasage entre les ondes d'émission dans un plan de référence commun pour chaque radar aux moyens d'émission et aux moyens de réception.

3. Système d'exploitation de plusieurs radars voisins selon l'une des revendications 1 ou 2, caractérisé en ce que les moyens de réception des différents radars ont des longueurs électriques identiques comportant des moyens de déphasage permettant d'introduire un déphasage correspondant au déphasage entre les signaux d'émission.

4. Système d'exploitation de plusieurs radars voisins selon la revendication 3, caractérisé en ce que les moyens de déphasage introduisent des avances de phase dans les moyens de réception des radars dont les signaux d'émission sont en avance de phase.

5. Système d'exploitation de plusieurs radars voisins selon l'une des revendications 1 ou 2, caractérisé en ce que les moyens de réception des différents radars ont des longueurs électriques différentes et qu'ils comportent chacuns des moyens de déphasage per mettant d'égaler les déphasages dus à ces différences de longueurs électriques.

6. Système d'exploitation de plusieurs radars voisins selon l'une des revendications précédentes, caractérisé en ce qu'il comporte trois radars (R1, R2, R3) disposés aux sommets d'un triangle, la longueur d'un côté du triangle étant nettement supérieure à l'ouverture de l'antenne du radar (R1, R2 ou R3) ayant la plus grande ouverture.

7. Système d'exploitation de plusieurs radars voisins selon l'une des revendications précédentes, caractérisé en ce qu'il comporte cinq radars (R1 à R5) disposés aux sommets de deux triangles de dimensions différentes et possédant un sommet en commun.

8. Système d'exploitation de plusieurs radars voisins selon la revendication 2, caractérisé en ce qu'il comporte, entre un premier radar 1 et un deuxième radar 2 distant du premier, un guide d'onde (G) et que chaque radar comporte: un premier coupleur directif (CP1) permettant de coupler les moyens d'émission et de réception (15) du radar au guide d'onde (G); un système de mesu re de déphasage (S1) possédant une première et une deuxième entrée (e1, e'1) et permettant de mesurer le déphasage existant entre deux signaux reçus sur ses deux entrées; un deuxième coupleur directif (CM1) permettant de coupler le guide d'onde, vers son propre radar, à la première entrée (e1) de l'appareil de mesure de déphasage (S1); un troisième coupleur directif CM'1 permettant de coupler le guide d'onde (G), vers le radar distant, à la deuxième entrée (e'1) du système de mesure de déphasage (S1).

9. Système d'exploitation de plusieurs radars voisins selon la revendication 8, caractérisé en ce que la longueur électrique de la voie reliant le premier coupleur directif (CP1) au deuxième coupleur directif (CM1) est la même pour les différents radars couplés entre eux.

10. Système d'exploitation de plusieurs radars voisins selon la revendication 8, caractérisé en ce que la longueur électrique de la voie reliant le deuxième coupleur directif (CM1) au troisième coupleur directif (CM'1) est la même pour les différents radars couplés entre eux.

11. Système d'exploitation de plusieurs radars voisins selon la revendication 8, dans lequel chaque radar possède dans ses moyens de réception un récepteur (REC'1), caractérisé en ce que la longueur électrique de la voie reliant le premier coupleur directif (CP1) au récepteur (REC'1) est la même pour les différents radars couplés entre eux.

**Patentansprüche**

1. Betriebssystem für N benachbarte Radargeräte, von denen jedes Sendemittel (E1, E2), Empfangsmittel (REC1, REC2) und Antennenmittel (A1, A2) besitzt, die über einen Duplexer (D1, D2) an die Sende- und die Empfangsmittel angeschlossen sind, dadurch gekennzeichnet, daß die Sendemittel zur Aussendung von Signalen einer gleichen Frequenz ausgerüstet sind, wobei jedes Signal eine eigene Bezugsphase besitzt und die Beziehungen zwischen diesen Bezugsphasen beliebig sind, wobei die Aussendung in zueinander achsparallelen Strahlen erfolgt, die in großer Entfernung in einer gemeinsamen Zone koinzidieren, und wobei der Abstand zwischen zwei benachbarten Radarantennen (A1, A2), jeweils paarweise (R1-R2 oder R2-R3) genommen, deutlich größer als die größte der Antennenöffnungen der betrachteten Radargeräte ist, so daß sich im Inneren der gemeinsamen Zone Richtungen ergeben, in denen die von allen Radargeräten ausgesandten Signale im wesentlichen in Phase liegen, und daß die Empfangsmittel Mittel (DEPH1, DEPH2) aufweisen, mit denen die empfangenen Signale in Phase gebracht werden, so daß sich eine Vektoraddition dieser Signale ergibt.

2. Betriebssystem für mehrere benachbarte Radargeräte nach Anspruch 1, dadurch gekennzeichnet, daß es Mittel enthält, die es erlauben, die Phasenverschiebung zwischen den ausgesendeten Wellen in einer Bezugsebene zu messen, die für jedes Radargerät sowohl für die Sendemittel als auch für die Empfangsmittel gilt.

3. Betriebssystem für mehrere benachbarte Radargeräte nach einem der Ansprüche 1 oder 2, dadurch gekennzeichnet, daß die Empfangsmittel der verschiedenen Radargeräte einander identische elektrische Längen besitzen und Phasenverschiebungsmittel aufweisen, mit denen es möglich ist, eine Phasenverschiebung gemäß der Phasenverschiebung zwischen den Sendesignalen einzuführen.

4. Betriebssystem für mehrere benachbarte Radargeräte nach Anspruch 3, dadurch gekennzeichnet, daß die Phasenverschiebungsmittel Phasenvoreilungen in den Empfangsmitteln der Radargeräte einführen, deren Sendesignale eine Phasenvoreilung aufweisen.

5. Betriebssystem für mehrere benachbarte Radargeräte nach einem der Ansprüche 1 oder 2, dadurch gekennzeichnet, daß die Empfangsmittel der verschiedenen Radargeräte unterschiedliche elektrische Längen haben und je Phasenverschiebungsmittel aufweisen, mit denen es möglich ist, die Phasenverschiebungen aufgrund dieser verschiedenen elektrischen Längen auszugleichen.

6. Betriebssystem für mehrere benachbarte Radargeräte nach einem der vorhergehenden Ansprüche, dadurch gekennzeichnet, daß es drei Radargeräte (R1, R2, R3) aufweist, die sich an den Ecken eines Dreiecks befinden, wobei die Länge einer Seite des Dreiecks deutlich größer als die Öffnung der Antenne des Radargeräts (R1, R2 oder R3) mit der größten Öffnung ist.

7. Betriebssystem für mehrere benachbarte Radargeräte nach einem der vorhergehenden Ansprüche, dadurch gekennzeichnet, daß es fünf Radargeräte (R1 bis R5) aufweist, die an den Ecken zweier Dreiecke unterschiedlicher Abmessungen liegen, wobei diese Dreiecke eine gemeinsame Ecke besitzen.

8. Betriebssystem für mehrere benachbarte Radargeräte nach Anspruch 2, dadurch gekennzeichnet, daß es zwischen einem ersten Radargerät 1 und einem zweiten vom ersten entfernt angeordneten Radargerät 2 einen Wellenleiter (G) aufweist und daß jedes Radargerät aufweist: einen ersten Richtkoppler (CP1), der es erlaubt, die Sendemittel und Empfangsmittel (15) des Radargeräts an den Wellenleiter (G) zu koppeln, ein System zur Messung der Phasenverschiebung (S1) mit einem ersten und einem zweiten Eingang (e1, e'1), mit dem die zwischen zwei an den beiden Eingängen empfangenen Signalen existierende Phasenverschiebung gemessen werden kann, einem zweiten Richtkoppler (CM1), mit dem der Wellenleiter in Richtung auf sein eigenes Radargerät an den ersten Eingang (e1) des Systems zur Messung der Phasenverschiebung (S1) gekoppelt werden kann, einen dritten Richtkoppler CM'1, mit dem der Wellenleiter (G) in Richtung auf das entfernte Radargerät an den zweiten Eingang (e'1) des Systems zur Messung der Phasenverschiebung (S1) gekoppelt werden kann.

9. Betriebssystem für mehrere benachbarte Radargeräte nach Anspruch 8, dadurch gekennzeichnet, daß die elektrische Länge des den ersten Richtkoppler (CP1) mit dem zweiten Richtkoppler (CM1) verbindenden Pfads die gleiche für die verschiedenen miteinander gekoppelten Radargeräte ist.

10. Betriebssystem für mehrere benachbarte Radargeräte nach Anspruch 8, dadurch gekennzeichnet, daß die elektrische Länge des den zweiten Richtkoppler (CM1) mit dem dritten Richtkoppler (CM'1) verbindenden Pfads für die verschiedenen miteinander gekoppelten Radargeräte stets die gleiche ist.

11. Betriebssystem für mehrere benachbarte Radargeräte nach Anspruch 8, in dem jedes Radargerät in seinen Empfangsmitteln einen Empfänger (REC'1) aufweist, dadurch gekennzeichnet, daß die elektrische Länge des den ersten Richtkoppler (CP1) mit dem Empfänger (REC'1) verbindenden Pfads für die verschiedenen miteinander gekoppelten Radargeräte stets dieselbe ist.

**Claims**

1. An operational system for N closely located radars, each radar comprising transmission means (E1, E2), reception means (REC1, REC2) and antenna means (A1, A2) connected via a duplexer (D1, D2) to the transmission and reception means, characterized in that the transmission means are made to transmit signals of a common frequency, each signal having an individual phase reference and the relations between these phase references being whatever, according to beams of parallel axes which coincide at great distance inside a common area, the distance separating any two antennas (A1, A2) of closely located radars (R1-R2 or R2-R3) being substantially greater than the greatest of the antenna openings of the considered radars, such that inside the common area there exist directions along which the signals transmitted by all the radars are substantially in phase, and that the reception means comprise means (DEPH1, DEPH2) for adjusting the phase of the signals received in order to realize the vector addition of these signals.

2. An operational system for a plurality of closely located radars according to claim 1, characterized in that it comprises means allowing to measure the phase shift between the transmission waves in a reference plane which is common for each radar to the emission means and to the reception means.

3. An operational system for a plurality of closely located radars according to one of claims 1 or 2, characterized in that the reception means of the different radars have identical electric lengths and comprise phase shifting means allowing to introduce a phase shift corresponding to the phase shift between the transmission signals.

4. An operational system for a plurality of closely located radars according to claim 3, characterized in that the phase shifting means introduce advance phase shifts into the reception means of the radars, the transmission signals of which present an advance in phase.

5. An operational system for a plurality of closely located radars according to one of claims 1 or 2, characterized in that the reception means of the different radars have different electric lengths and each comprise phase shifting means allowing to equalize the phase shifts due to the differences of the electrical lengths.

6. An operational system for a plurality of closely located radars according to one of the preceding claims, characterized in that it comprises three radars (R1, R2, R3) located at the apices of a triangle, the length of one side of the triangle being substantially greater than the opening of the antenna of the radar (R1, R2 or R3) having the largest opening.

7. An operational system for a plurality of closely located radars according to one of the preceding claims, characterized in that it comprises five radars (R1 to R5) located at the apices of two triangles of different sizes and having a common apex.

8. An operational system for a plurality of closely located radars according to claim 2, characterized in that it comprises a wave-guide (G) between a first radar 1 and a second radar 2 remotely located from the first one, and that each radar comprises: a first directional coupler (CP1) intended to couple the transmission and the reception means (15) of the radar to the wave-guide (G); a phase shift measuring system (S1) having a first and a second input (e1, e'$_1$) and intended to measure the phase shift existing between two signals received on these two inputs; a second directional coupler (CM1) intended to couple the wave-guide, towards its own radar, to the first input (e1) of the phase shift measuring system (S1); a third directional coupler CM'1 intended to couple the wave-guide (G), towards the remote radar, to the second input (e'1) of the phase shift measuring system (S1).

9. An operational system for a plurality of closely located radars according to claim 8, characterized in that the electric length of the path connecting the first directional coupler (CP1) to the second directional coupler (CM1) is the same for the different radars which are mutually coupled.

10. An operational system for a plurality of closely located radars according to claim 8, characterized in that the electric length of the path connecting the second directional coupler (CM1) to the third directional coupler (CM'1) is the same for the different radars which are mutually coupled.

11. An operational system for a plurality of closely located radars according to claim 8, in which each radar disposes of a receiver (REC'1) in its reception means, characterized in that the electric length of the path connecting the first directional coupler (CP1) to the receiver (REC'1) is the same for the different radars which are mutually coupled.

# FIG_1

$n$

$\mu$ $\theta$

R1    O    R2

E

M

# FIG_2

R3

R1    R2

FIG_3

FIG_'.

# FIG_5

FIG_6

# FIG_7

R1    R2        R3                                              R4

# FIG_8

R'4

R'3

R'2

R1      R2              R3                                      R4

# FIG_9

Vers $D_i$        $A_i$        $DE_i$        $P_i$

$C^{de}$

$E_i$